# EUROPÄISCHE PATENTANMELDUNG

(11) **EP 0 550 397 A1**
(43) Veröffentlichungstag der Anmeldung: **07.07.1993**
(21) Anmeldenummer: 92890259.2
(22) Anmeldetag: 10.12.1992
(51) Int. Cl.: B60R 11/04, B60R 1/00

(54) **Beobachtungs- und Überwachungseinrichtung an Fahrzeugen od.dgl.**

(30) Priorität: 02.01.1992 AT 2/92; 10.09.1992 AT 1810/92
(71) Anmelder: Kainz, Wolfgang, A-3021 Pressbaum (AT)
(72) Erfinder: Kainz, Wolfgang, A-3021 Pressbaum (AT)
(74) Vertreter: Köhler-Pavlik, Johann, Dipl.-Ing.

(57) **Zusammenfassung**

Beobachtungs- und Überwachungseinrichtung, insbesondere als Unfall-Beweissicherungseinrichtung, an Kraftfahrzeugen od.dgl., bei welchem zumindest eine am Fahrzeug montierte elektronische Sichtvorrichtung 1 mit einem Bildspeicher in Verbindung steht. Die elektronische Sichtvorrichtung 1 ist an der Vorderseite des Fahrzeuges od.dgl. angebracht und auf den vor dem Fahrzeug od.dgl. liegenden Bereich ausgerichtet.

## Beschreibung

Die Erfindung betrifft eine Beobachtungs- und Überwachungseinrichtung, insbesondere als Unfall-Beweissicherungseinrichtung, an Kraftfahrzeugen od.dgl., bei welcher zumindest eine am Fahrzeug montierte elektronische Sichtvorrichtung mit einem Bildspeicher in Verbindung steht.

In der DE-OS 2 209 952 wird beispielsweise vorgeschlagen, die Bildinformationen von an der Rückseite des Fahrzeuges montierten und nach hinten ausgerichteten Kameras aufzuzeichnen und zur späteren Wiedergabe festzuhalten. Weiters ist der genannten Patentschrift die parallele Darstellung mehrerer von verschiedenen Kameras stammenden Bilder auf Monitoren am Armaturenbrett des Fahrzeuges zu entnehmen.

Die US-PS 4 214 266, FR-PS 2 174 348 oder FR-PS 2 465 612 zeigen an der Hinterseite des Fahrzeuges zum Teil an der Stoßstange montierte elektronische Sichtvorrichtungen zum Beobachten des hinter dem Fahrzeug liegenden Bereiches. Wie in der weiteren FR-PS 2 634 435 beschrieben ist, kann eine derartige Kamera auch schwenkbar am Fahrzeug montiert sein.

Ausgehend vom beschriebenen Stand der Technik war es die Aufgabe der vorliegenden Erfindung, eine Vorrichtung anzugeben, die eine größere Nützlichkeit bei der nachträglichen Unfallrekonstruktion aufweist.

Die Aufgabe wird gemäß der Erfindung dadurch gelöst, daß eine elektronische Sichtvorrichtung an der Vorderseite des Fahrzeuges od.dgl. angebracht und auf den vor dem Fahrzeug od.dgl. liegenden Bereich ausgerichtet ist.

Der Begriff "Fahrzeug od.dgl." umfaßt insbesondere Straßen- und Schienenfahrzeuge, Boote und Luftfahrzeuge.

Mit der genannten Einrichtung zur Bildaufzeichnung kann z.B. ein heranlaufender Fußgänger, das plötzlich ausscherende Vorderfahrzeug etc. dokumentiert werden und die Aufzeichnungen können jederzeit und beliebig oft auf normalen Fernsehgeräten wieder gezeigt und als Beweismittel ausgewertet werden.

Eine weitere Steigerung der Nützlichkeit der erfindungsgemäßen Einrichtung im Sinne der nachträglichen Unfallrekonstruierung ist dadurch gegeben, daß eine zweite an der Rückseite des Fahrzeuges od.dgl. montierte elektronische Sichtvorrichtung vorgesehen ist, die auf den hinter dem Fahrzeug od.dgl. liegenden Bereich ausgerichtet ist. Dadurch wird ein erweiterter Sichtbereich erfaßt.

Gemäß einem weiteren Merkmal der Erfindung ist zumindest eine Sichtvorrichtung beim Einlegen eines Ganges automatisch aktivierbar. Unter "Einlegen eines Ganges" sind selbstverständlich alle Handlungen bei der Führung eines Fahrzeuges od.dgl. inbegriffen, die zu einer vom Fahrzeug selbst ausgehenden Bewegung desselben führen. Die beschriebene Art der Inbetriebnahme der Einrichtung schließt einen Betrieb des Fahrzeuges mit ausgeschalteter Beobachtungs- und Überwachungseinrichtung aus.

Unter Beibehaltung des soeben angegebenen Vorteiles kann der größere Sichtbereich zweier elektronischer Sichtvorrichtungen sicher ausgenützt werden, wenn beim Einlegen eines Ganges beide Sichtvorrichtungen automatisch aktivierbar sind. Damit erhöht sich der Informationswert der Aufzeichnungen bei der Rekonstruierung von Unfallhergängen.

Alternativ dazu können beide Sichtvorrichtungen mit der Gangschaltung des Fahrzeuges od.dgl. derart in Verbindung stehen, daß beim Einlegen eines Vorwärtsganges zumindest die Sichtvorrichtung an der Vorderseite und beim Einlegen eines Rückwärtsganges zumindest die Sichtvorrichtung an der Rückseite automatisch aktivierbar ist. Damit ist sichergestellt, daß der für die Unfalldokumentierung wichtige Bereich in der jeweiligen Fahrtrichtung überwacht wird, wobei ein Vergessen auf das Einschalten der erfindungsgemäßen Einrichtung ebenfalls mit Sicherheit ausgeschlossen ist.

Durch eine geeignete Schaltung kann dabei erzielt werden, daß bei allen Vorwärtsgängen die besagte Bildaufzeichnung erfolgt.

Gemäß einem weiteren Merkmal der Erfindung stehen die elektronischen Sichtvorrichtungen mit einem Monitor im oder am Armaturenbrett des Fahrzeuges od.dgl. in Verbindung und die Sichtbilder zumindest einer Sichtvorrichtung scheinen auf dem Monitor auf. Dadurch kann mit der erfindungsgemäßen Einrichtung neben deren Bedeutung als Unfall- Beweissicherungseinrichtung auch die Führung des jeweiligen Fahrzeuges erleichtert werden, da der vom Fahrer nicht oder schlecht übersehbare Bereich auf dem Monitor gezeigt werden kann. Somit ist die erfindungsgemäße Einrichtung auch in besonders vorteilhafter Weise, z. B. bei straßengebundenen Kraftfahrzeugen auch als Einparkhilfe zu verwenden.

Die Führung des jeweiligen Fahrzeuges wird weiter erleichtert, wenn die Sichtbilder beider Sichtvorrichtungen gemeinsam am selben Monitor erscheinen.

Gemäß einem weiteren Merkmal der Erfindung ist zumindest eine Sichtvorrichtung schwenkbar montiert. Damit wird der Bereich vergrößert, der mit der jeweiligen elektronischen Sichtvorrichtung beobachtet werden kann, was ihren Wert als Hilfe zur Führung des jeweiligen Fahrzeuges od.dgl. weiter erhöht.

Jede schwenkbare Sichtvorrichtung kann gemäß einem weiteren Merkmal der Erfindung mit der Lenkung des Fahrzeuges in Verbindung stehen, sodaß sie synchron mit der Stellung der Räder oder anderer Steuereinrichtungen schwenkbar ist. Dies ist sowohl bei der Unfall- Beweissicherung von Vorteil, da die jeweilige Kamera, beispielsweise den Straßen- oder Schienenverlauf auch bei kurviger Strecke abdeckt und bei Straßenfahrzeugen auch beim Einparken in der jeweiligen Situation optimal angepaßt es Beobachtungsfeld bietet, ohne den Fahrer dadurch zusätzlich zu belasten, daß er die jeweilige Sichtvorrichtung manuell bedienen müßte.

Trotzdem kann zumindest die schwenkbare Sichtvorrichtung auch mit einer Schaltbox im oder am Armaturenbrett verbunden sein, sodaß sie manuell verschwenkt werden kann. Die Sichtvorrichtung kann links-rechts und umgekehrt, bzw. wenn notwendig auch auf- und abwärts geschwenkt werden, sodaß ein besonders großer Blickwinkel ermöglicht wird und insbesondere die Führung des Fahrzeuges weiter erleichtert.

Besonders vorteilhaft für die nachträgliche Rekonstruierung von Unfallhergängen wird die erfindungsgemäße Einrichtung dadurch, daß die Sichtvorrichtungen mit einer Anlage zur digitalen Bildverarbeitung und einem sogenannten "Eimerkettenspeicher" verbunden sind. Durch diese zusätzlichen Sicherheitserweiterung werden die Bilder der elektronischen Sichtvorrichtungen nach digitaler Verarbeitung über den Eimerkettenspeicher auf einem vorzugsweise magnetischen Bildspeicher auf Computerbasis aufgezeichnet, wobei vorhandene Bordcomputer dazu verwendet werden können. Die mögliche Speicherung auf einem Mikrochip hat den Vorteil, daß die Bildaufzeichnungen beliebig oft gelöscht und überschrieben werden können, ohne daß die Qualität der neu aufgezeichneten Information darunter leidet. Lm Falle einer Aufzeichnung, beispielsweise auf Magnetband, wäre dies nach mehr oder wenig langer Zeit unbrauchbar und müßte ausgetauscht werden. Schlechte Qualität der Bildaufzeichnung würde darüberhinaus die Nützlichkeit zur Unfall- Beweissicherung herabsetzen.

Bei der erfindungsgemäßen Einrichtung können unter Heranziehung eines Bordcomputers ständig alle Daten, wie beispielsweise Geschwindigkeit, Uhrzeit, Bremsbetätigung, Verzögerung etc. eingeblendet und aufgezeichnet werden. Dies funktioniert ähnlich der sogenannten "Blackbox", die bereits in Erprobung ist, jedoch nur technische Daten von diversen Sensoren abspeichert, welche unbedingt von einem Sachverständigen interpretiert werden müssen. Die Einbeziehung von Bildinformation gestattet dagegen eine wesentlich einfachere und auch für technische Laien leicht interpretierbare Dokumentation.

Vorteilhafterweise ist ein Aufprallschalter vorgesehen und mit einer Schaltung verbunden, die das kontinuierliche Überschreiben der Aufzeichnungen der Sichtbilder der Sichtvorrichtungen im Speicher beendet. So ist es möglich, daß die Aufzeichnung der Bildinformation von einer Zeitspanne von beispielsweise 30 sek vor bis 50 sek nach Aufprallereignis aufgezeichnet bleibt.

In der nachfolgenden Beschreibung soll die Erfindung unter Heranziehung eines Ausführungsbeispiels für ein Automobil unter Bezugnahme auf die beigefügten Zeichnungen näher erläutert werden. Dabei zeigen
- Fig. 1: ein Fahrzeug mit einer Sichtvorrichtung,
- Fig. 2: ein Fahrzeug mit zwei Sichtvorrichtungen, und
- Fig. 3: eine Ansicht des Armaturenbrettes des Fahrzeuges der Fig. 1 oder 2.

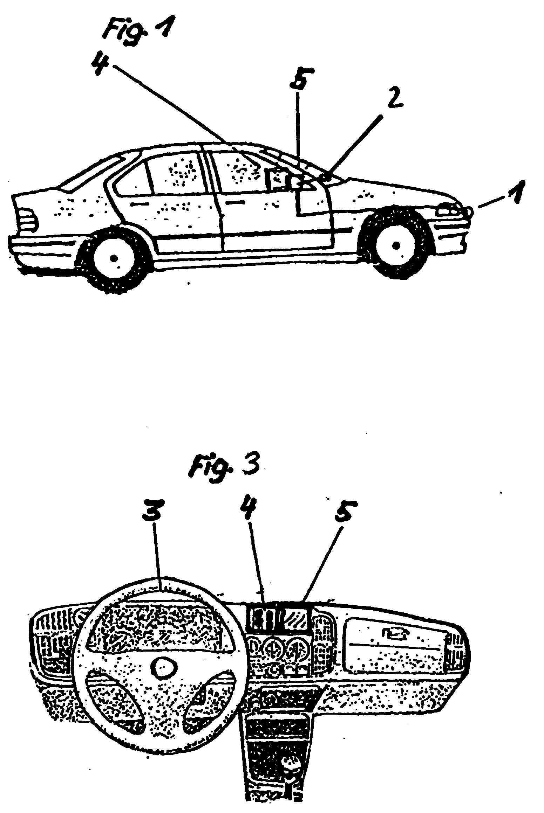

In Fig. 1 ist ein Automobil dargestellt, bei welchem beispielhaft über oder in der vorderen Stoßstange des Fahrzeuges als elektronische Sichtvorrichtung eine Kleinstkamera 1 angebracht ist. Diese Kamera 1, welche vorzugsweise in CCD-Technik ausgeführt ist, kann mit einem schwenkbaren Schutzgehäuse ganz oder teilweise umhüllt sein. Selbstverständlich ist die Anbringung der Kamera 1 aber nicht an den Stoßstangenbereich gebunden, sodaß auch eine Anbringung direkt hinter der Windschutzscheibe (der mit 2 bezeichneten Position) denkbar und für bestimmte Situationen von Vorteil ist.

Die Kameragröße könnte die Maße L 35 x B 40 x H 12 mm aufweisen, wobei diese Baugröße den derzeitigen Stand der Technik repräsentiert und in Zukunft natürlich noch weiter verkleinert werden kann. Wie analog bei Scheinwerferwaschanlagen ist es sinnvoll, das Kameraobjektiv allenfalls mittels Hochdruckwasserstrahl durch periodische, automatische oder manuelle Schaltbetätigungen zu reinigen. Vereisungen oder Beschlagungen können durch Heizvorrichtungen ähnlich wie bei Spiegel- oder Heckscheibenheizungen an der Kamera verhindert werden.

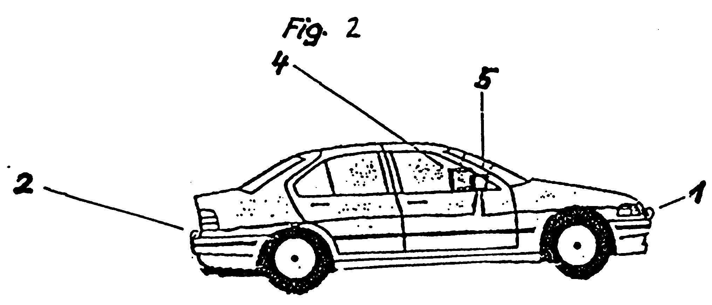

In Fig. 2 ist ein gleichartiges Fahrzeug wie in Fig. 1 dargestellt, bei dem aber nun zwei beispielhaft über oder in der vorderen und hinteren Stoßstange des Fahrzeuges eingebaute Kleinstkameras 1,2 als elektronische Sichtvorrichtungen angebracht sind. Zumindest die vordere Kamera 1 kann schwenkbar angebracht sein, vorzugsweise sind es beide Kameras 1,2.

Für die Maße, die allfällige Umhüllung oder weitere Zusatzeinrichtungen gilt sinngemäß das für die Fig. 1 Gesagte.

In Fig. 3 ist schematisch ein Armaturenbrett des in Fig. 1 bzw. 2 dargestellten Fahrzeuges gezeigt, bei dem an einer beliebigen Leerstelle möglichst im Bereich des Lenkrades 3 ein kleiner Monitor 4 und allenfalls eine Schaltbox angebracht sind. Die Schaltbox 5 kann zum Schwenken der Kameras 1,2 allenfalls zu deren Ein- und Ausschalten, zum Betätigen von Reinigungs- oder Heizvorrichtungen für die Kameras bzw. allgemein für alle beliebigen Funktionen der erfindungsgemäßen Einrichtung bestimmte Schalter aufweisen.

## Patentansprüche

1. Beobachtungs- und Überwachungseinrichtung, insbesondere als Unfall- Beweissicherungseinrichtung, an Fahrzeugen od.dgl., bei welcher zumindest eine am Fahrzeug od.dgl. montierte elektronische Sichtvorrichtung mit einem Bildspeicher in Verbindung steht, dadurch gekennzeichnet, daß eine elektronische Sichtvorrichtung (1) an der Vorderseite des Fahrzeuges od.dgl. angebracht und auf dem vor dem Fahrzeug od.dgl. liegenden Bereich ausgerichtet ist.

2. Einrichtung nach Anspruch 1, gekennzeichnet durch eine zweite an der Rückseite des Fahrzeuges montierte elektronische Sichtvorrichtung (2), die auf den hinter dem Fahrzeug liegenden Bereich ausgerichtet ist.

3. Einrichtung nach Anspruch 1 oder 2, dadurch gekennzeichnet, daß zumindest eine Sichtvorrichtung (1,2) beim Einlegen eines Ganges automatisch aktivierbar ist.

4. Einrichtung nach Anspruch 1, dadurch gekennzeichnet, daß beim Einlegen eines Ganges beide Sichtvorrichtungen (1,2) automatisch aktivierbar sind.

5. Einrichtung nach Anspruch 1, dadurch gekennzeichnet, daß beide Sichtvorrichtungen (1,2) mit der Gangschaltung des Fahrzeuges derart in Verbindung stehen, daß beim Einlegen eines Vorwärtsganges zumindest die Sichtvorrichtung (1) an der Vorderseite und beim Einlegen eines Rückwärtsganges zumindest die Sichtvorrichtung (2) an der Rückseite aktivierbar ist.

6. Einrichtung nach einem der Ansprüche 1 bis 5, dadurch gekennzeichnet, daß die Sichtvorrichtungen (1,2) mit einem Monitor (4) im oder am Armaturenbrett des Fahrzeuges od.dgl. in Verbindung stehen und Sichtbilder zumindest einer Sichtvorrichtung (1,2) auf dem Monitor (4) aufscheinen.

7. Einrichtung nach einem der Ansprüche 2 bis 5, dadurch gkennzeichnet, daß die Sichtbilder beider Sichtvorrichtungen (1,2) gemeinsam am selben Monitor (4) aufscheinen.

8. Einrichtung nach einem der Ansprüche 1 bis 7, dadurch gekennzeichnet, daß zumindest eine der Sichtvorrichtungen (1,2) schwenkbar montiert ist.

9. Einrichtung nach Anspruch 8, dadurch gekennzeichnet, daß jede schwenkbare Sichtvorrichtung mit der Lenkung des Fahrzeuges od.dgl. in Verbindung steht, sodaß sie synchron mit der Stellung der Räder oder anderer Steuereinrichtungen schwenkbar ist.

10. Einrichtung nach Anspruch 8 oder 9, dadurch gekennzeichnet, daß zumindest die schwenkbar Sichtvorrichtung mit einer Schaltbox (5) im oder am Armaturenbrett verbunden ist.

11. Einrichtung nach einem der vorangehenden Ansprüche, dadurch gekennzeichnet, daß die Sichtvorrichtungen (1,2) mit einer Anlage zur digitalen Bildverarbeitung und einem "Eimerkettenspeicher" verbunden sind.

12. Einrichtung nach Anspruch 11, dadurch gekennzeichnet, daß ein Aufprallschalter vorgesehen und mit einer Schaltung verbunden ist, die das kontinuierliche Überschreiben der Aufzeichnung der Sichtbilder der Sichtvorrichtungen (1,2) im Speicher beendet.
